# EUROPEAN PATENT APPLICATION

(11) **EP 3 016 182 A1**
(43) Date of publication of application: **04.05.2016**
(21) Application number: 14191502.5
(22) Date of filing: 03.11.2014
(51) Int. Cl.: H01M 4/14, H01M 4/66, H01M 4/68, H01M 10/18, H01M 4/02, H01M 4/04

(54) **A BIPOLAR PLATE FOR A BIPOLAR LEAD ACID BATTERY AND A METHOD OF MANUFACTURING A SUBSTRATE FOR A BIPOLAR PLATE**

(71) Applicant: Centurion Bipolair B.V., 6045 JA Roermond (NL)
(72) Inventor: Saakes, Machiel, 7316 BC Apeldoorn (NL); ten Have, Petrus Theodorus Jacobus Henricus, 5912 SM Venlo (NL); Coopmans, Johannes Gerardus Jozef, 5928 RN Venlo (NL); van Wijngaarden, Robertus Gerardus Aquinus, 6562 KP Groesbeek (NL)
(74) Representative: De Vries & Metman

(57) **Abstract**

A bipolar plate (4) for a bipolar lead acid battery (1) comprises a non-porous substrate (8) disposed between a layer of positive active material and a layer of negative active material. The substrate (8) comprises a polymer matrix which contains an electrically conductive filler distributed within the polymer matrix. The filler comprises diamond particles having a size smaller than 100 µm, more preferably smaller than 0.1 µm, e.g. diamond nanoparticles having a size smaller than 20 nm. The diamond particles are preferably boron-doped diamond particles. A bipolar plate according to the claimed invention shows a high level of corrosion stability and thereby improves the durability of a bipolar lead-acid battery incorporating said bipolar plate.

## Description

The present invention relates to a bipolar plate for a bipolar lead acid battery, comprising a non-porous electrically conductive substrate disposed between a layer of positive active material and a layer of negative active material, the substrate comprising a polymer matrix which contains an electrically conductive filler.

Bipolar lead acid batteries are well known in the field of rechargeable batteries. They have great advantages in respect of specific energy (Wh/kg) and specific power (W/kg). In terms of rechargeable batteries there is a widespread use of lead acid batteries as traction batteries. Particularly for that use it is desired to have a high energy-to-weight ratio. The applicant intends to create bipolar lead acid batteries having a ratio above 50 Wh/kg.

A bipolar lead acid battery comprises one or more bipolar cells and an electrolyte. Each bipolar cell includes a bipolar plate which comprises a non-porous electrically conductive substrate disposed between a layer of positive active material and a layer of negative active material. Because of the non-porosity of the substrate the electrolyte cannot migrate through the bipolar plate. The layer of positive active material forms a positive electrode and the layer of negative active material forms a negative electrode. Under operating conditions of the battery, the reaction PbO₂ (s) + SO₄²⁻ (aq) + 4 H⁺ + 2 e⁻ ↔ PbSO₄ (s) + 2 H₂O (1) takes place at the positive electrode, whereas the reaction Pb (s) + SO₄²⁻ (aq) ↔ PbSO₄ (s) + 2 e⁻ takes place at the negative electrode. The direction of both reactions depends on whether the battery is charged (<-) or discharged (->) .

It is an object of the present invention to provide a bipolar plate which improves the durability of a bipolar lead acid battery.

This is achieved by the bipolar plate according to the invention which is characterized in that the filler comprises diamond particles having a size smaller than 100 µm.

The substrate of the bipolar plate must be electrically conductive, but liquid proof. For that reason the substrate is non porous and the polymer matrix must have a closed, impermeable structure. Electrical conductivity of diamond particles larger than 100 µm is limited. In other words they are substantially electrically insulating. For diamond particles below 100 µm electrical conductivity increases with decreasing particle size.

An advantage of the bipolar plate according to the invention is that it appears to have a high level of corrosion stability, which is particularly relevant at the side of the substrate where the positive active material is located. If corrosion of conductive particles occurs, tiny cavities in the substrate may arise, causing porosity which may create undesired leakage of electrolyte through the substrate. Due to the high level of corrosion stability of the substrate, a bipolar battery comprising one or more of the bipolar plates according to the invention has a relatively high level of durability. It is noted that the substrate may be a foil or a sheet.

In a preferred embodiment the diamond particles are doped diamond particles in order to enhance the electrical conductivity of the substrate. More specifically, boron may be used as dopant.

It is noted that the applicant has discovered that the corrosion stability of the bipolar plate already improves upon using a more crystalline structure of carbon black instead of using a non-crystalline structure of carbon black as a filler in a polymer matrix. Doped diamond particles have a still higher corrosion stability such that durability of a bipolar battery is improved dramatically.

Preferably, the diamond particles are distributed substantially homogeneously within the polymer matrix, since this provides a well-distributed electrical current through the substrate under operating conditions of a bipolar battery which comprises the bipolar plate.

The diamond particles may have a size smaller than 10 µm, preferably smaller than 1 µm, still more preferably smaller than 0.1 µm, and still more preferably smaller than 0.01 µm. The lower level of the size range may be 2-5 nm, for example.

The polymer matrix may be made from a polyolefin, polyester, a fluorocarbon based polymer, or the like. Particularly, applying a fluorocarbon is advantageous in terms of chemical stability when used in a bipolar battery.

The concentration of the diamond particles may be higher than the percolation threshold in order to obtain a desired level of electrical conductivity of the substrate.

In an advantageous embodiment the layer of positive active material comprises a paste containing lead oxide, whereas a foil containing lead and tin is disposed between the substrate and the layer of positive active material, and the layer of negative active material comprises a paste containing lead, whereas a foil containing lead and tin is disposed between the substrate and the layer of negative active material. It appears that the foils between the substrate and the respective layers creates a reliable and effective contact between the respective layers and the substrate. In practice the substrate and the foils may be laminated to each other, hence forming a bipolar plate.

The invention is also related to a bipolar lead acid battery, comprising at least one bipolar plate as described hereinbefore. In practice the battery comprises a plurality of bipolar plates, between which an electrolyte is present.

The invention is also related to a method of manufacturing a substrate for a bipolar plate of a bipolar lead acid battery, comprising the steps of supplying a powder of polymer and diamond particles having a size smaller than 100 µm, mixing the powder of polymer and diamond particles and extruding or molding the mixture so as to create the substrate. In order to extrude or mold the mixture, it may be heated or the polymer may already be heated before adding the particles to the polymer.

In a practical embodiment the particle size of the powder of polymer is in the range of 0.1-500 µm.

The invention is also related to a method of manufacturing a substrate for a bipolar plate of a bipolar lead acid battery, comprising the steps of dissolving a polymer in a solvent, supplying diamond particles having a size smaller than 100 µm, mixing the solution of said polymer and said diamond particles, applying the mixture onto a supporting member and curing the mixture so as to create the substrate. The polymer may be ETFE (Ethylene tetrafluoroethylene) or PVDF (Polyvinylidene fluoride), for example, which is dissolved in an organic solvent such as NMP (N-Methyl-2-pyrrolidone), MEK (methyl ethyl ketone), acetone or the like.

The mixture may be applied onto the supporting member by means of a coating process, a molding process or the like. Numerous methods of spreading the mixture onto the supporting member before curing are conceivable, for example by means of a doctor blade, spray coating, ink jetting, etc. The curing process may be supported by adding heat in order to evaporate the solvent.

The supporting member may stick to the substrate. In that case the resulting product has at least two layers: the substrate and the supporting member. The supporting member be a foil, for example. The resulting intermediate product is still suitable for a bipolar plate when the substrate is present at only one side of the supporting member as long as this side is directed to the layer of positive active material in the bipolar plate upon assembly. This side of the substrate is most sensitive to oxidation.

The invention will hereafter be elucidated with reference to drawings showing an embodiment of the invention very schematically.
Fig. 1 is an exploded, partly cut-away perspective view of an embodiment of a bipolar lead acid battery according to the invention.
Fig. 2 is a cross-sectional view of the battery of Fig. 1 in assembled condition.
Fig. 3 is an enlarged view of a part of the assembled battery which is indicated by III in Fig. 2.

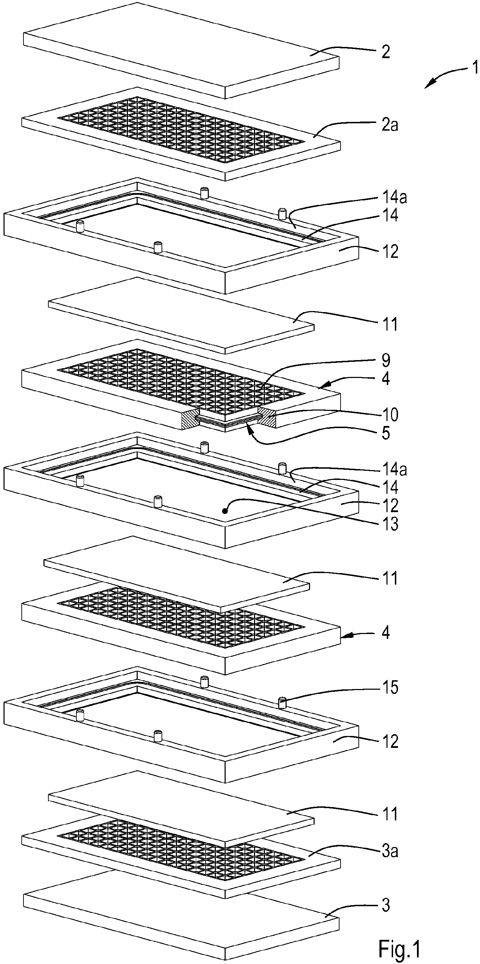

Fig. 1 shows parts of an embodiment of a bipolar lead acid battery 1 according to the invention before assembly. The battery 1 comprises a first terminal electrode 2 and a second terminal electrode 3. The terminal electrodes 2, 3 may be made of aluminium plates or alternative conductive materials. It is known that in bipolar batteries the electrical current is collected perpendicular to the plane of the terminal electrodes 2, 3. The terminal electrodes 2, 3 can be connected to an electrical source (not shown) for charging the battery 1 or an electrical load for discharging the battery 1.

In the embodiment as shown two bipolar plates 4 are disposed between the first and second terminal electrodes 2, 3. The number of bipolar plates 4 defines the voltage level of the battery 1; in practice more than two bipolar plates 4 may be applied. The bipolar plates 4 are depicted as units or plates. Each of the bipolar plates 4 comprises a bipolar plate composite layer 5 which is provided with positive and negative active material at its respective opposite sides.

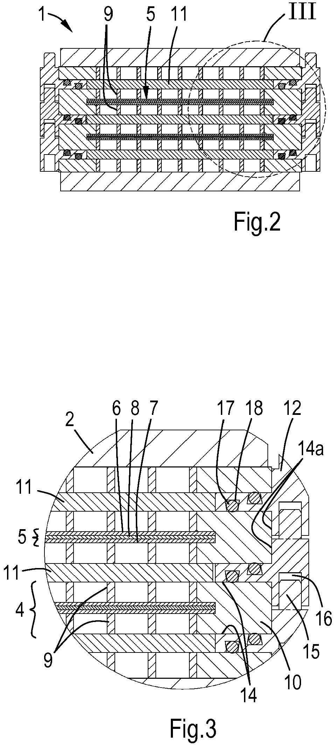

The bipolar plate composite layer 5 can be made by laminating electrically conductive foils 6, 7 to opposite sides of an electrically conductive but non-porous central substrate sheet 8, see Fig. 3. The opposite sides of the bipolar plate composite layer 5 are provided with respective grids 9. The grid 9 at one side of the bipolar plate 4 is provided with a positive active material and the grid 9 at the opposite side is provided with a negative active material. The positive active material may be a positive paste, for example a paste that contains lead oxide, whereas the negative active material may be a negative paste, for example a paste that contains lead. The positive active material may contain tri or tetrabasic lead sulphate converted to lead dioxide after formation.

Each of the electrically conductive foils 6, 7 comprises lead and tin. The electrically conductive non-porous central substrate sheet 8 comprises a polymer matrix which contains boron doped diamond particles having a size smaller than 20 nm. The substrate sheet 8 comprises a foil that is made by extruding a homogeneous mixture of polymer particles and boron doped diamond particles, but alternative manufacturing methods are conceivable. The polymer may be a polyolefin, polyester or a fluorocarbon based polymer, but numerous alternative polymers are conceivable. The particle size of the powder of polymer is in the range of 0.1-500 µm. The thickness of the substrate sheet 8 may be about 1-100 µm and the thickness of each of the foils 6, 7 may be 76 µm, for example, but smaller or larger dimensions are conceivable.

The grids 9 may be attached to the respective conductive foils 6, 7 by means of laminating, injection molding, transfer molding or an alternative method. In practice the grids 9 are made of a non-conductive material, for example a polymer. Figs. 2 and 3 show that the foils 6, 7 and the substrate sheet 8 extend beyond the peripheral edges of the grids 9. Furthermore, the bipolar plate 4 is provided with a sealing cell edge 10 around the edges of the foils 6, 7, the substrate sheet 8 and the grids 9. This avoids a conductive bridge between the positive and negative electrodes or foils 6, 7 at the peripheral edges thereof. The sealing cell edge 10 is made of a non-conductive material, for example a polymer. In the embodiment as shown, the sealing cell edge 10 does not only cover the peripheral edges of the foils 6, 7 and the electrically conductive non-porous substrate sheet 8, but also forms a frame around the peripheral edges of the grids 9. The sealing cell edge 10 may be rigid or slightly flexible.

Fig. 1 shows grid plates 2a, 3a which are adjacent to the first and second terminal electrodes 2, 3, respectively. In practice the grid plates 2a, 3a are provided with respective pastes of positive and negative active material, as well. In Fig. 1 the grid plates 2a, 3a are shown separately from the first and second terminal electrodes 2, 3, but they may be integrated.

The battery 1 is provided with separators 11, which are disposed between the neighbouring bipolar plates 4, between the first terminal electrode 2 and the neighbouring bipolar plate 4, and between the second terminal electrode 3 and the neighbouring bipolar plate 4. Under operating conditions of the battery 1 the separators 11 are filled with an electrolyte or acid. It is clear that the sealing cell edge 10 prevents the electrolyte from migrating to the peripheral edges of the bipolar plate composite layer 5. In practice the separator 11 is made of a glass mat and often indicated by AGM or absorptive glass mat.

Fig. 1 shows that the battery 1 also comprises spacers 12 which have several functions. The spacer 12 is a rectangular frame member, which is preferably rigid. It has a central aperture 13 that defines a substantially rectangular opening through the frame member. The spacer 12 does not conduct electrical current and may be made of a polymer, for example polypropylene. An upper surface of the frame member is stepped down around the inner peripheral edge of the aperture 13. This defines a plate support 14 for supporting the bipolar plate 4, as illustrated in Figs. 2 and 3. The plate support 14 projects into the aperture 13 from an inner edge 14a of the frame member. A lower surface of the frame member is adapted similarly as the upper surface, such that each spacer 12 comprises two plate supports 14 facing away from each other. The spacer 12 is provided with interlocking members in the form of pins 15 and corresponding pin holes 16, in which the pins 15 fit. The pins 15 and pin holes 16 are located such that upon assembling the battery 1 the parts can be stacked in a simple manner.

Each separator 11 and the central aperture 13 of the spacer 12 are dimensioned such that upon stacking the parts of the battery 1, the separator 11 fits within the peripheral edge of the aperture 13. Fig. 2 illustrates this condition, in which it can be seen that the separator 11 extends beyond the peripheral edges of grids 9, but it is still slightly smaller than the aperture 13.

The bipolar plates 4 are stacked with the separators 11 between the terminal electrodes 2, 3. The positive side of each bipolar plate 4 faces the negative side of the adjacent bipolar plate 4.

In the embodiment of the battery as shown in Figs. 1-3 each of the bipolar plates 4 has a peripheral sealing cell edge 10, which avoids a conductive bridge between the positive and negative electrodes or foils 6, 7 at the peripheral edges of the bipolar plate 4, on the one hand, and has a peripheral outer wall which fits to a peripheral inner edge of the spacer 12, indicated by 14a, on the other hand. In the embodiment as shown the spacers 12 are stackable by means of their pins 15 and pin holes 16, but for stable stacking it is also conceivable that this function of the spacers 12 is integrated in the sealing cell edge 10 (not shown). In this case the sealing cell edge 10 could be provided with both interlocking members and sealing means for preventing electrolyte migrating from the separators 11 to the outside.

In the embodiment as shown the bipolar plates 4 are block-shaped and fit within a frame portion of the spacer 12. Since each spacer 12 has similar frame portions at its opposite sides, each bipolar plate 4 can be incorporated by a cavity which is defined by inner walls of two adjacent spacers 12. The inner walls are formed by the opposite plate supports 14 and the inner edges 14a of the adjacent spacers 12. In practice the sealing cell edge 10 of the bipolar plate 4 is clamped between the plate supports 14 of the adjacent spacers 12.

The battery 1 is provided with sealing means in the form of an O-ring 17 which is present in a groove 18 in the frame member at the plate support 14 of the spacer 12, see Fig. 3. The groove 18 extends in circumferential direction of the bipolar plate 4. The O-ring 17 prevents leakage of electrolyte from the separator 11 to the outside between surfaces where the sealing cell edge 10 of the bipolar plate 4 contacts the spacer 12. The groove 18 has a dovetail-shaped cross section, which serves to receive a portion of the O-ring 17 under compression. Furthermore, this groove shape serves to retain the O-ring 17 in the groove 18 during handling the spacer 12 upon assembling the battery 1. The O-ring is flexible and may be made of a thermoplastic material.

The invention is not limited to the embodiment shown in the drawings and described hereinbefore, which may be varied in different manners within the scope of the claims.

## Claims

1. A bipolar plate (4) for a bipolar lead acid battery (1), comprising a non-porous electrically conductive substrate (8) disposed between a layer of positive active material and a layer of negative active material, the substrate (8) comprising a polymer matrix which contains an electrically conductive filler, **characterized in that** the filler comprises diamond particles having a size smaller than 100 µm.

2. A bipolar plate (4) according to claim 1, wherein the diamond particles are doped diamond particles.

3. A bipolar plate (4) according to claim 2, wherein boron is used as dopant.

4. A bipolar plate (4) according to one of the preceding claims, wherein the diamond particles are distributed substantially homogeneously within the polymer matrix.

5. A bipolar plate (4) according to one of the preceding claims, wherein the diamond particles have a size smaller than 10 µm, preferably smaller than 1 µm, still more preferably smaller than 0.1 µm, and still more preferably smaller than 0.01 µm.

6. A bipolar plate (4) according to one of the preceding claims, wherein the polymer matrix is made from a polyolefin, polyester or a fluorocarbon based polymer.

7. A bipolar plate (4) according to one of the preceding claims, wherein the concentration of the diamond particles is higher than the percolation threshold in order to obtain a desired level of electrical conductivity of the substrate (8).

8. A bipolar plate (4) according to one of the preceding claims, wherein the layer of positive active material comprises a paste containing lead oxide, whereas a foil containing lead and tin (6) is disposed between the substrate (8) and the layer of positive active material, wherein the layer of negative active material comprises a paste containing lead, whereas a foil containing lead and tin (7) is disposed between the substrate (8) and the layer of negative active material.

9. A bipolar lead acid battery (1) comprising at least one bipolar plate (4) according to one of the preceding claims.

10. A method of manufacturing an electrically conductive non-porous substrate (8) for a bipolar plate (4) of a bipolar lead acid battery (1), comprising the steps of supplying a powder of polymer and diamond particles having a size smaller than 100 µm, mixing the powder of polymer and diamond particles and extruding or molding the mixture so as to create the substrate (8).

11. A method according to claim 10, wherein the particle size of the powder of polymer is in the range of 0.1-500 µm.

12. A method of manufacturing an electrically conductive non-porous substrate (8) for a bipolar plate (4) of a bipolar lead acid battery (1), comprising the steps of dissolving a polymer in a solvent, supplying diamond particles having a size smaller than 100 µm, mixing the solution of said polymer and said diamond particles, applying the mixture onto a supporting member and curing the mixture so as to create the substrate (8).

13. A method according to claim 12, wherein the mixture is applied onto the supporting member by means of a coating process.

14. A method according to claim 12 or 13, wherein the supporting member sticks to the substrate (8).
